# EUROPÄISCHE PATENTANMELDUNG

(11) **EP 0 947 385 A2**
(43) Veröffentlichungstag der Anmeldung: **06.10.1999**
(21) Anmeldenummer: 99101805.2
(22) Anmeldetag: 27.01.1999
(51) Int. Cl.: B60P 3/18

(54) **Fahrbare Betonpumpe**

(30) Priorität: 26.03.1998 DE 19813411
(71) Anmelder: ELBA-WERK Maschinen-Gesellschaft mbH & Co., D-76275 Ettlingen (DE)
(72) Erfinder:
(74) Vertreter: Pitruk, Claus Peter, Dipl.-Phys.

(57) **Zusammenfassung**

Beschrieben wird eine fahrbare Betonpumpe mit einem Mastbock für einen Betonverteilermast, einem mit dem Mastbock starr verbundenen U-förmigen Tragrahmen, der nach hinten weisende Tragrahmen-Schenkel besitzt, zwei starr am Tragrahmen befestigte Teleskopführungen, die diagonal nach vorne teleskopierbare Stützbeine aufnehmen, in unterschiedlicher Höhe am Tragrahmen angebracht sind und sich zwischen den Tragrahmen-Schenkeln im Winkel kreuzen. Langreichweitige Betonverteilermaste erfordern Stützbeine als Kippschutz. Gewünscht ist eine kleine Grundfläche und ein torsionsarmer Rahmen bei großer Nutzlast. Es wird vorgeschlagen, daß die Teles-kopführungen der teleskopierbaren vorderen Stützbeine nach hinten allenfalls ein kurzes Stück über die Tragrahmenbreite hinaus führen und vorzugsweise die in Fahrtstellung zurückgezogenen, die Tragrahmenbreite überragenden rückwärtigen Bereiche der Stützbeine frei liegen. Bevorzugt ist eine die Tragrahmenbreite seitlich überragende Versorgungseinrichtung, vorzugsweise ein Tank, von hinten angesetzt und die hinteren Stützbeine sind beabstandet von den Teleskopführungsenden für die vorderen Stützbeine am hinteren Außenbereich der Versorgungseinrichtung ausschwenkbar angelenkt.

## Beschreibung

Die vorliegende Erfindung betrifft eine fahrbare Betonpumpe nach dem Oberbegriff von Anspruch 1.

Fahrbare Betonpumpen sind bekannt. Dabei ist in den letzten Jahren die Anforderung nach leistungsfähigeren Betonpumpen mit großer Reichweite des Betonverteilermastes gestiegen. Ein seitliches Kippen der fahrbaren Betonpumpe bei ausgefahrenem Betonverteilermast wird typisch mit Stützbeinen verhindert, die nach vorne und hinten seitlich ausgefahren werden. Da langreichweitige Betonverteilermasten ein großes Lastmoment haben, muß diese Abstützung über eine große Grundfläche erfolgen und für die starken wirkenden Kräfte, insbesondere für die Torsionskräfte am den Mastbock tragenden Rahmen ausgelegt sein; dennoch darf die Anordnung aber nicht zu schwer werden, damit bei gegebener Fahrgestell- und Motorauslegung noch genügend Nutzlast für den Betonverteilermast selbst verbleibt.

Aus der EP 0 357 988 B1 ist eine fahrbare Betonpumpe mit einem zwei- oder mehrachsigen Fahrgestell, einem am vorderachsnahen Mastbock um eine vertikale Achse drehbar gelagerten Verteilermast, zwei als Teleskopbeine ausgebildeten, mit ihren Teleskoprohren an einem starr mit dem Mastbock verbundenen Tragrahmen angeordneten, diagonal nach vorne weisenden vorderen Stützbeinen und zwei ausstellbaren hinteren Stützbeinen bekannt, wobei die hinteren Stützbeine im Bereich des rückwärtigen Endes der Teleskoprohre der am Fahrgestell jeweils gegenüberliegenden vorderen Stützbeine um eine vertikale Achse von ihrer parallel zum Fahrgestell nach hinten weisenden Fahrstellung in ihre diagonal nach hinten und außen weisende Abstützstellung schwenkbar gelagert sind. Diese Anordnung ist für sehr hohe Lastmomente jedoch noch nicht optimal geeignet.

Die Aufgabe der vorliegenden Erfindung besteht darin, eine fahrbare Betonpumpe für sehr weitreichende Betonverteilermasten auszulegen, und insbesondere darauf, eine leichte und im Betrieb dennoch sichere Abstützung vorzusehen.

Die Aufgabe der vorliegenden Erfindung wird durch den unabhängigen Anspruch gelöst. Bevorzugte Ausführungsformen finden sich in den abhängigen Ansprüchen.

Die Erfindung wird im folgenden nur beispielsweise anhand der Zeichnung beschrieben. In dieser zeigt:
- Fig. 1: eine fahrbare Betonpumpe in Seitenansicht;
- Fig. 2: eine Draufsicht auf ein Detail von Fig.1.

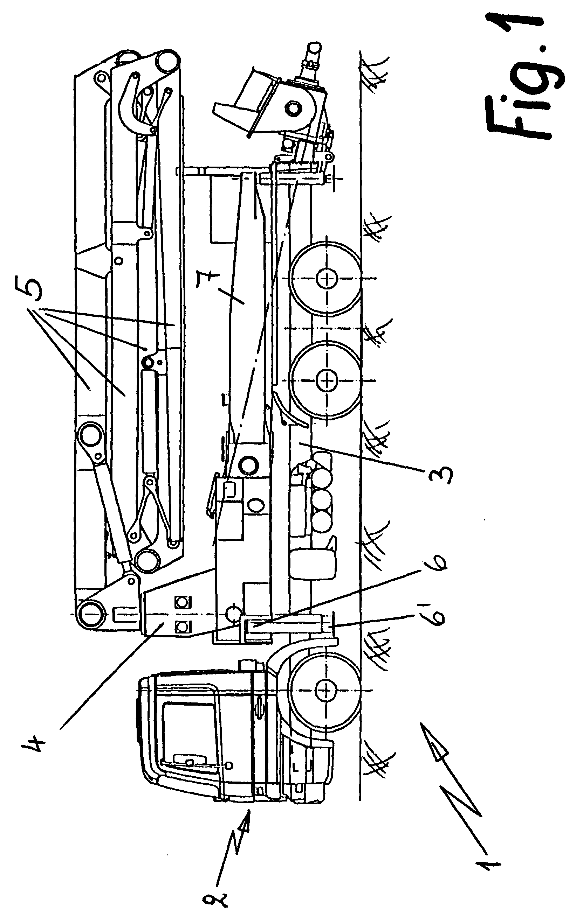

Nach Figur 1 umfaßt eine allgemein mit 1 bezeichnete Betonpumpe 1 ein Fahrgestell 2, auf welchem ein Tragrahmen 3 für den Mastbock 4 eines Betonverteilermastes 5 vorgesehen ist.

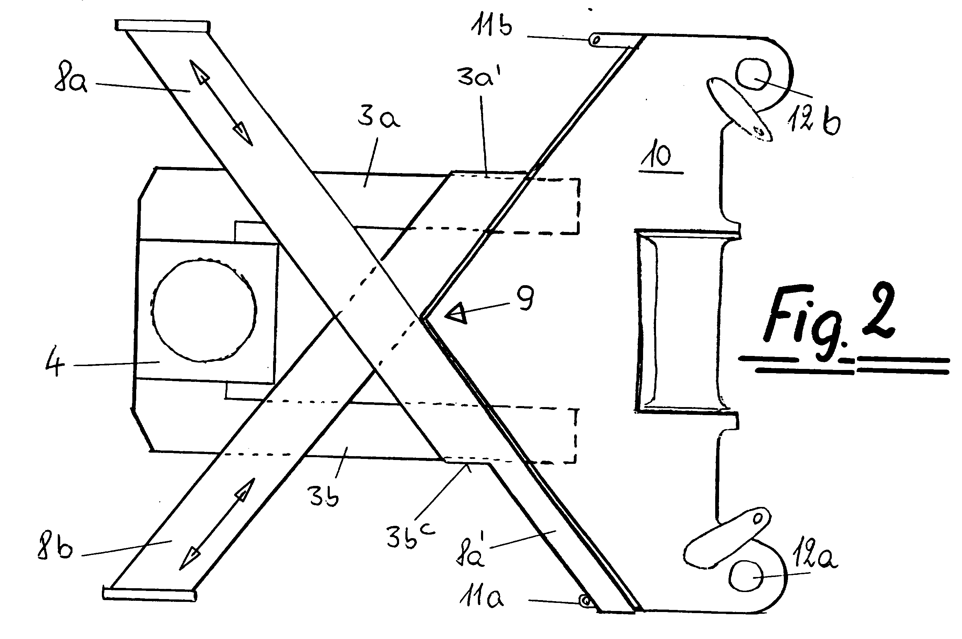

Am Tragrahmen 3 sind diagonal nach vorne herausteleskopierbare vordere Stützbeine 6 und seitlich ausschwenkbare hintere Stützbeine 7 angebracht, welche in Schwenkzapfenlagern 12 (vergleiche Fig. 2) gelagert sind. In der in Figur 1 gezeigten Fahrtstellung sind die vorderen Stützbeine 6 eingezogen; die hinteren Stützbeine 7 sind eingeschwenkt. Die vorderen und hinteren Stützbeine weisen jeweils endseitig ausfahrbare Stützen bzw. Stützfüße 6', 7' auf, die in Betriebsstellung ausgefahren sind und letztlich auf der Erde aufstehen.

Nach Figur 2 ist der Tragrahmen 3 mit zwei in Fahrtrichtung nach hinten weisenden Schenkeln 3a und 3b U-förmig gebildet. Der Mastbock 4 ist am - in Fahrtrichtung betrachtet - vorderen Ende des Tragrahmens 3 starr angebracht. Diagonal über die Schenkel 3a und 3b nach vorne hinaus erstrecken sich Teleskopführungen 8a und 8b für die vorderen Stützbeine 6. Die Teleskopführungen 8a und 8b überkreuzen sich in unterschiedlicher Höhe zwischen den Schenkeln 3a und 3b und erstrecken sich über den Schnittpunkt hinaus nach hinten bis zur Außenkante 3a' bzw. 3b' des Tragrahmens 3, mit welchen sie starr verbunden sind. Beide Teleskopführungen 8a und 8b enden jeweils an der Seitenkante der sich parallel gegenüberliegenden Tragrahmenschenkel 3a bzw. 3b (vergleiche Bezugszeichen 3a', 3b').

In Figur 2 sind zwei unterschiedliche Ausführungsformen für die Teleskopführungen 8a und 8b veranschaulicht. Die Teleskopführung 8b endet direkt an der Tragrahmenaußenkante, während die Teleskopführung 8a in Verlängerung noch einen schmaler Ansatzbereich 8a' außerhalb des Tragrahmens 3 aufweist, der als Auflageschiene für die vorderen Stützbeine 6 im eingezogenen (Fahrt-) Zustand dient.

In den zwischen den Schenkeln 3a und 3b des Tragrahmens 3 von den sich kreuzenden Teleskopführungen 8a und 8b gebildeten Winkel 9 erstreckt sich von hinten eine Versorgungseinrichtung 10 für die fahrbare Betonpumpe, wie zum Beispiel ein Öltank 10 für die Hydraulik-Ölversorgung des Betonverteilermastes 5. Dabei ist die Versorgungseinrichtung 10 eine vom Tragrahmen 3 funktionell getrennte, separate Baugruppe. Sie liegt auf den Tragrahmenschenkeln 3a und 3b auf und ist mit diesen, den Teleskopführungen 8a und 8b sowie gegebenenfalls den schmalen Ansatzbereichen 8a' dauerhaft starr und kraftaufnehmend verbunden, beispielsweise über Bolzen oder eine Schweißverbindung.

An der Versorgungseinrichtung 10 sind außen nach vorne weisend Sicherungsbolzen 11a und 11b zur Sicherung der in Fahrtstellung zurückteleskopierten vorderen Stützbeine 6 vorgesehen; die Sicherungsbolzen 11a / 11b können gleichermaßen als Anlenkbolzen für die zum Teleskopieren der vorderen Stützbeine 6 erforderlichen Kolben-Zylinder-Einrichtungen ausgebildet sein.

Nach hinten sind an der Versorgungseinrichtung 10 von den Sicherungsmitteln 11 und somit den Endpunkten der zurückteleskopierten vorderen Stützbeine 6 beabstandet Zapfenlöcher 12a und 12b zur Aufnahme der Schwenkzapfen der hinteren Stützbeine 7 vorgesehen.

Im Betrieb wird die Betonpumpe mit eingefahrenen Stützbeinen zum Einsatzort, d.h. zu einer Baustelle gefahren, wo die Transportsicherungen gelöst und die Stützbeine ausgestellt werden. Wenn der Betonverteilermast ausgefahren wird, und sein Lastmoment über den Mastbock, den Tragrahmen und die dann ausgefahrenen Stützen der Stützbeine zur Erde abgeleitet werden muß, ist eine Tor-sion des Tragrahmens und/oder des Fahrgestells durch die von der Versorgungseinrichtung 10 bewirkte Stabilisierung der Teleskop-schienen und des Tragrahmens praktisch ausgeschlossen. Dies gilt besonders, wenn die Versorgungseinrichtung als Tank gebildet ist und die oberen und unteren Bleche des Tanks gemeinsam stabilisierend wirken.

## Patentansprüche

1. Fahrbare Betonpumpe mit
- einem Mastbock für einen Betonverteilermast,
- einem mit dem Mastbock starr verbundenen insbesondere U-förmigen Tragrahmen,
- zwei starr am Tragrahmen befestigte Teleskopführungen, die diagonal nach vorne teleskopierbare vordere Stützbeine aufnehmen, in unterschiedlicher Höhe am Tragrahmen angebracht sind und sich im Winkel kreuzen, und
- zwei seitlich ausschwenkbaren hinteren Stützbeine
dadurch gekennzeichnet,
daß die Teleskopführungen die teleskopierbaren vorderen Stützbeine allenfalls ein kurzes Stück über die Tragrahmenbreite hinaus nach hinten führen und vorzugsweise die in Fahrtstellung zurückgezogenen, die Tragrahmenbreite überragenden rückwärtigen Bereiche der vorderen Stützbeine wenigstens partiell frei liegen.

2. Fahrbare Betonpumpe nach Anspruch 1,
dadurch gekennzeichnet,
daß eine vorzugsweise schmale Auflageschiene für jeden in Fahrtstellung zurückgezogenen, die Tragrahmenbreite überragenden rückwärtigen Bereich des vorderen Stützbeins vorgesehen ist.

3. Fahrbare Betonpumpe nach Anspruch 1 oder 2,
dadurch gekennzeichnet,
daß an den Tragrahmen eine diesen seitlich überragende Versorgungseinrichtung, vorzugsweise ein Öltank angesetzt ist, die sich von hinten in den Winkel erstreckt und an die die hinteren Stützbeine beabstandet von den Teleskopführungsenden für die vorderen Stützbeine am hinteren Außenbereich der Versorgungseinrichtung ausschwenkbar angelenkt sind.

4. Fahrbare Betonpumpe nach Anspruch 3,
dadurch gekennzeichnet,
daß die Versorgungseinrichtung mit dem Tragrahmen und/oder den Teleskopführungen starr verbunden beziehungsweise fest verriegelt oder verbolzt ist.
